# EUROPEAN PATENT APPLICATION

(11) **EP 2 804 062 A1**
(43) Date of publication of application: **19.11.2014**
(21) Application number: 13749663.4
(22) Date of filing: 07.02.2013
(51) Int. Cl.: G05B 19/418, G05B 19/04, G06F 1/00

(54) **HUMAN-MACHINE INTERFACE APPARATUS AND CONTROL CABINET COMPRISING SAME**

(30) Priority: 13.02.2012 CN 201220045274 U
(71) Applicant: Schneider Electric Industries SAS, 92500 Rueil-Malmaison (FR)
(72) Inventor: ZENG, Xiaojing, Shanghai 201203 (CN); ZHANG, Tao, Shanghai 201203 (CN); MARCHETTI, Christophe, 06516 Carros Cedex (FR); CHAMKHIA, Hichem, 06516 Carros Cedex (FR)
(74) Representative: Manitz, Finsterwald & Partner GbR
(86) International application number: PCT/CN2013/071542
(87) International publication number: WO 2013/120443

(57) **Abstract**

Disclosed is a human-machine interface apparatus (10), comprising a display unit (102) and a control unit (101), wherein the display unit (102) and the control unit (101) have two types of installation state. In the first installation state, the display unit (102) and the control unit (101) are directly connected together, and in the second installation state, the display unit (102) and the control unit (101) are installed in two locations, respectively, and connected via a cable (104). Since the installation state of the display unit (102) and the control unit (101) can be switched between the two types of installation state as required, flexible installation is provided for a user according to the working environment. Further disclosed is a control cabinet including the present human-machine interface.

## Description

### TECHNICAL FIELD

The present invention relates to a human-machine interface apparatus, more specifically relates to a human-machine interface apparatus for industrial devices and a control cabinet including such human-machine interface apparatus.

### BACKGROUND ART

In many industrial application environments, a human-machine interface (HMI) apparatus is needed to be installed for information exchange between a user and a system. A human-machine interface apparatus comprises a display unit for displaying information and input parameters, and a control unit for a simple operation and implementing a connection with industrial control devices. Generally, human-machine interface apparatus may integrate these two parts together, the display unit and the control unit, inseparable, being within one product or unit. In this manner, products are easy to use but meanwhile have many drawbacks, e.g., displays with different dimensions have different installation dimensions, which is inconvenient to install; further, the fact that the control unit and the display unit are integrated in one unit is not convenient for extensions of product functions.

To avoid above problems, the display unit and the control unit are separated and used as individual modules respectively, in which the display unit is installed in front of the panel of the cabinet for a user to read information and input parameters, and the control unit is connected via a connector to the display unit of the front panel from the rear of the panel. However, it is probably not convenient to install or use when a communication interface of the control unit is connected to an external device, since the panel for installing the human-machine interface apparatus is usually a part of the control cabinet door.

For that reason, there is a need to solve this problem.

### SUMMARY OF THE PRESENT INVENTION

To this end, the present invention provides a new design of a human-machine interface apparatus capable of supporting two installation ways at the same time, which is convenient and flexible.

The present invention provides a human-machine interface apparatus installed on a control cabinet, comprising a display unit and a control unit, and the display unit and the control unit have two types of installation state; in the first installation state the display unit and the control unit are directly connected together, and in the second installation state the display unit and the control unit are installed in two locations, respectively, and connected via a cable.

The present invention also provides a control cabinet comprising a human-machine interface apparatus which comprises a display unit and a control unit, and the display unit and the control unit have two types of installation state; in the first installation state the display unit and the control unit are directly connected together, and in the second installation state the display unit and the control unit are installed in two locations, respectively, and connected via a cable.

Since the installation state of the display unit and the control unit can be switched between the two types of installation state as required, flexible installation is provided for a user according to the working environment.

### BRIEF DESCRIPTION OF DRAWINGS

Other aspects, features and advantages will be easily understood and thus readily determined by following detailed description with reference to appended drawings, wherein:
Fig.1 is a schematic illustration of the first installation state of the human-machine interface apparatus according to an embodiment of the present invention;
Fig. 2 is a schematic illustration of the first installation state of the human-machine interface apparatus according to an embodiment of the present invention in a view from another direction;
Fig. 3 is a schematic illustration of the second installation state of the human-machine interface apparatus according to an embodiment of the present invention;

The appended drawings are intended to describe illustrative embodiments of the present disclosure and should not be construed as limit the scope thereof.

### DETAILED DESCRIPTION OF EMBODIMENTS

For the purpose of clarity, particular terms are used upon description of embodiments illustrated in drawings. The disclosure of present patent specification however is not intended to be limited to such selected particular terms, and should be understood that each particular element comprises all the technical equivalents operating in similar ways and realizing similar effects.

Referring now to the appended drawings and embodiments, the present invention will be described in more detail.

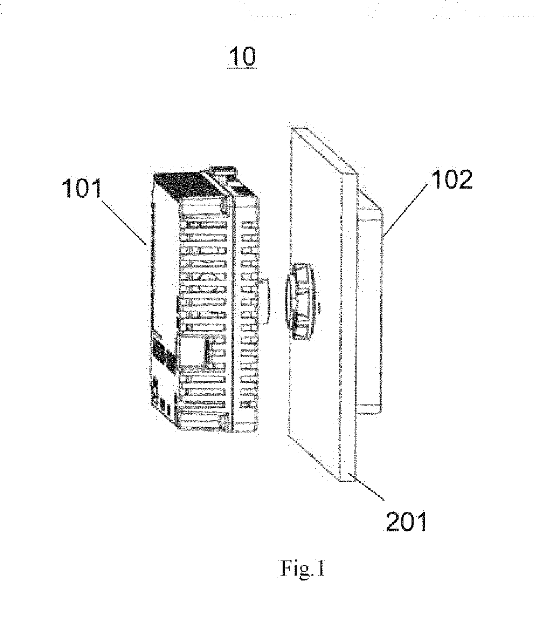

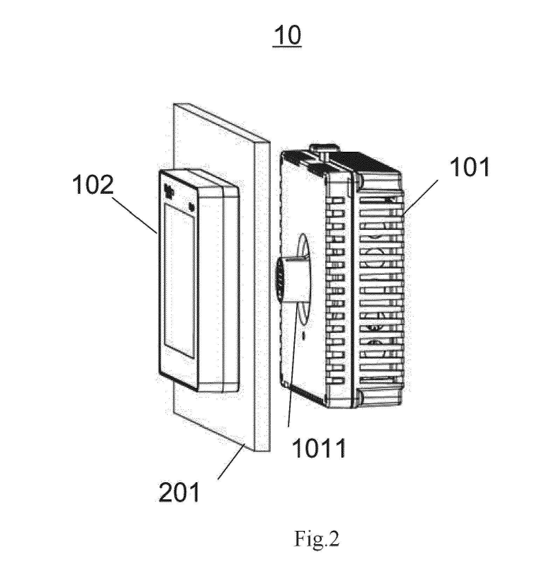

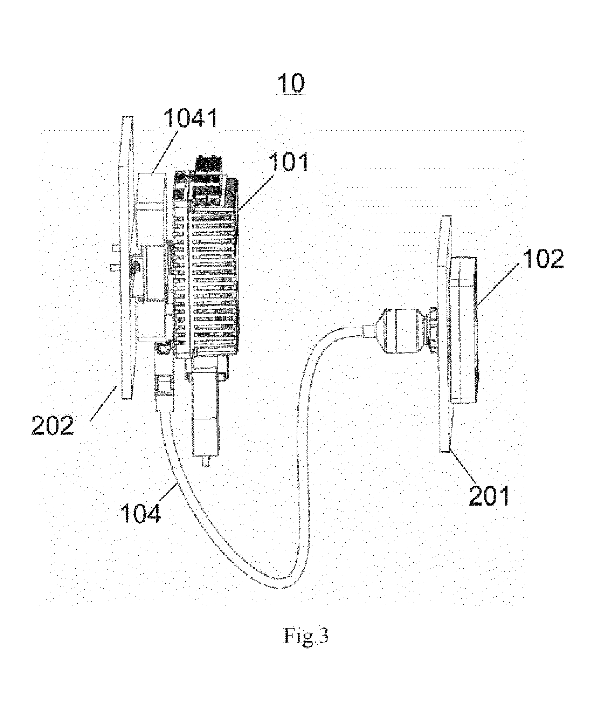

The human-machine interface apparatus 10 in this embodiment is installed on the control cabinet (not shown). The human-machine interface apparatus 10 comprises a display unit 102 and a control unit 101, and the display unit 102 and the control unit 101, if needed, may have two types of installation state, the first state and the second state. Fig. 1 and Fig. 2 are schematic illustrations of the first installation, and Fig. 3 is a schematic illustration of the second installation.

As shown in Fig. 1 and Fig. 2, the first installation state is the same as the installation state in prior art, i.e., the display unit 102 passes through a circular hole in a panel 201 of the control cabinet and a customized nut at the back of the panel 201 fits with thread on the display unit 102 to fasten the display unit 102 in front of the panel. The control unit 101 is then connected to the display unit 102 via a connector 1011 from the rear of the panel 201 and fixed. The circular hole in the panel 201 is applicable to a display unit 102 of any dimension, thereby simplifying the installation.

In the human-machine interface apparatus 10 of this embodiment, the display unit 102 and the control unit 101 can also be installed in the way of the second installation state illustrated in Fig. 3, instead of being installed in the way of the first installation state illustrated in Fig.1 and Fig. 2. As shown in Fig. 3, the installation of display unit 102 is the same as that of the first installation way, and the control unit 101 is connected to the display unit 102 via a customized cable 104. An end of the cable 104 is connected to the display unit 102, as shown in Fig. 2, another end of which is connected to the control unit 101, and the end connected to the control unit 101 comprises a structure that can be hung on a guide rail 202 inside of the control cabinet, resulting in an easy installation in a complicated working environment. Since the control unit 101 and the display unit 102 are separated by a certain distance under such installation state, electro-magnetic interference may occur. Thereby an EMC (Electro-Magnetic Compatibility) protection unit 1041 is also provided at the end of the cable 104 connected to the control unit 101.

Furthermore, those of skill in the art will easily appreciate that in the second installation state locations of the display unit 102 and of the control unit 101 are not limited to the panel and the guide rail, but may be anywhere as required.

With the human-machine interface apparatus 10 of this embodiment, the display unit 102 and the control unit 101 can be directly connected together or installed in two locations via the cable 104, which is convenient and flexible.

It is apparent that modifications and changes can be made in various ways to some embodiments having been described as above. Such modifications should not be considered as departing from the scope of the present invention but they are intended to fall within the range of the present invention.

## Claims

1. A human-machine interface apparatus installed on a control cabinet, comprising a display unit and a control unit, **characterized in that**,
the display unit and the control unit have two types of installation state; in the first installation state the display unit and the control unit are directly connected together, and in the second installation state the display unit and the control unit are installed in two locations, respectively, and connected via a cable.

2. The human-machine interface apparatus according to claim 1, **characterized in that**,
in the second installation state, an end of the cable connected to the control unit is hung on a guide rail inside of the control cabinet.

3. The human-machine interface apparatus according to claim 1, **characterized in that**,
in the second installation state, at the end of the cable connected to the control unit there is provided with an EMC protection modular.

4. The human-machine interface apparatus according to claim 1, **characterized in that**,
in the second installation state, the display unit is installed on a panel of the control cabinet.

5. A control cabinet comprising a human-machine interface apparatus which comprises a display unit and a control unit, **characterized in that**,
the display unit and the control unit have two types of installation state; in the first installation state the display unit and the control unit are directly connected together, and in the second installation state the display unit and the control unit are installed in two locations, respectively, and connected via a cable.

6. The human-machine interface apparatus according to claim 5, **characterized in that**,
in the second installation state, an end of the cable connected to the control unit is hung on a guide rail inside of the control cabinet.

7. The human-machine interface apparatus according to claim 5, **characterized in that**,
in the second installation state, at the end of the cable connected to the control unit there is provided with an EMC protection modular.

8. The human-machine interface apparatus according to claim 5, **characterized in that**,
in the second installation state, the display unit is installed on a panel of the control cabinet.
